(19) Europäisches Patentamt
European Patent Office
Office européen des brevets

(11) **EP 2 127 988 A1**

(12) **EUROPEAN PATENT APPLICATION**

(43) Date of publication:
**02.12.2009 Bulletin 2009/49**

(51) Int Cl.:
**B60W 40/10** [(2006.01)] **B60T 8/172** [(2006.01)]
**B60R 21/013** [(2006.01)]

(21) Application number: **09160540.2**

(22) Date of filing: **18.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.05.2008 US 154876**

(71) Applicant: **Delphi Technologies, Inc.**
**Troy, Michigan 48007 (US)**

(72) Inventors:
• **Hac, Aleksander B.**
**Dayton, OH 45419 (US)**

• **Nichols, David J.**
**Carmel, IN 46032 (US)**
• **Sygnarowicz, Daniel**
**32-830, Wojnicz (PL)**

(74) Representative: **Denton, Michael John**
**Delphi European Headquarters**
**64 avenue de la Plaine de France**
**BP 65059 Tremblay-en-France**
**95972 Roissy Charles de Gaulle Cedex (FR)**

(54) **Kinematic-based method of estimating the absolute roll angle of a vehicle body**

(57)    The absolute roll angle of a vehicle body (16) is estimated by blending two preliminary roll angle estimates based on their frequency (48) so that the blended estimate continuously favors the more accurate of the preliminary roll angle estimates. A first preliminary roll angle estimate based on the measured roll rate (22) is improved by initially compensating the roll rate signal for bias error using roll rate estimates inferred from other measured parameters (44). And a second preliminary roll angle estimate is determined based on the kinematic relationship among roll angle, lateral acceleration, yaw rate and vehicle speed (46). The blended estimate of roll angle utilizes a blending coefficient that varies with the frequency of the preliminary roll angle signals, and a blending factor used in the blending coefficient is set to different values depending whether the vehicle (10) is in a steady-state or transient condition (48).

READ INPUT SIGNALS ($\omega_{m\_un}$, $a_{xm}$, $a_{ym}$, $\Omega$, $V_x$) — 40

$\downarrow$

CORRECT $\omega_{m\_un}$ FOR ROLL/YAW COUPLING — 42

$\omega_m$

DETERMINE & REMOVE ROLL RATE SENSOR BIAS — 44

$\omega_{m\_cor}$

DETERMINE ESTIMATE OF TOTAL ROLL ANGLE — 46

$\phi_{ek}$

DETERMINE FINAL ESTIMATE OF TOTAL ROLL ANGLE — 48

$\phi_{ebl}$

CORRECT MEASURED LATERAL ACCELERATION — 50

$a_{y\_cor}$

OUTPUT $\phi_{ebl}$, $V_{ye}$, $\beta_e$ — 52

60

RETURN

FIG. 3

EP 2 127 988 A1

**Description**

TECHNICAL FIELD

The present invention relates to estimation of the absolute roll angle of a vehicle body for side airbag deployment and/or brake control, and more particularly to an improved kinematic-based estimation method.

BACKGROUND OF THE INVENTION

A number of vehicular control systems including vehicle stability control (VSC) systems and rollover detection/ prevention systems utilize various sensed parameters to estimate the absolute roll angle of the vehicle body -- that is, the angle of rotation of the vehicle body about its longitudinal axis relative to the level ground plane. In addition, knowledge of absolute roll angle is required to fully compensate measured lateral acceleration for the effects of gravity when the vehicle body is inclined relative to the level ground plane.

In general, the absolute roll angle of a vehicle must be estimated or inferred because it cannot be measured directly in a cost effective manner. Ideally, it would be possible to determine the absolute roll angle by simply integrating the output of a roll rate sensor, and in fact most vehicles equipped with VSC and/or rollover detection/prevention systems have at least one roll rate sensor. However, the output of a typical roll rate sensor includes some DC bias or offset that would be integrated along with the portion of the output actually due to roll rate. For this reason, many systems attempt to remove the sensor bias prior to integration. As disclosed in the U.S. Patent No. 6,542,792 to Schubert et al., for example, the roll rate sensor output can be dead-banded and high-pass filtered prior to integration. While these techniques can be useful under highly transient conditions where the actual roll rate signal is relatively high, they can result in severe under-estimation of roll angle in slow or nearly steady-state maneuvers where it is not possible to separate the bias from the portion of the sensor output actually due to roll rate.

A more effective approach, disclosed in the U.S. Patent Nos. 6,292,759 and 6,678,631 to Schiffmann, is to form an additional estimate of roll angle that is particularly reliable in slow or nearly steady-state maneuvers, and blend the two roll angle estimates based on specified operating conditions of the vehicle to form the roll angle estimate that is supplied to the VSC and/or rollover detection/prevention systems. In the Shiffmann patents, the additional estimate of roll angle is based on vehicle acceleration measurements, and a coefficient used to blend the two roll angle estimates has a nominal value except under rough-road or airborne driving conditions during which the coefficient is changed to favor the estimate based on the measured roll rate.

Of course, any of the above-mentioned approaches are only as good as the individual roll angle estimates. For example, the additional roll angle estimate used in the above-mentioned Schiffmann patents tends to be inaccurate during turning maneuvers. Accordingly, what is needed is a way of forming a more accurate estimate of absolute roll angle.

SUMMARY OF THE INVENTION

A method, in accordance with the present invention, of operation for a vehicle having a body that rolls about a longitudinal axis relative to a level ground plane, comprises the steps of: determining a first preliminary estimate of a total roll angle of the vehicle body based on a signal produced by a roll rate sensor, said first preliminary estimate having an accuracy that is highest under transient conditions when a roll rate of the vehicle body is relatively high; determining a second preliminary estimate of the total roll angle based on a measured yaw rate of the vehicle body, an estimated longitudinal velocity of the vehicle body and a measured lateral acceleration of the vehicle body, said second preliminary estimate having an accuracy that is highest under near steady-state conditions when the roll rate of the vehicle body is relatively low; blending the first and second preliminary estimates of the total roll angle with blending coefficients to form a blended estimate of the total roll angle, where the blending coefficients are continuously variable according to a frequency of said first and second preliminary estimates so that the blended estimate favors the first preliminary estimate under the transient conditions and the second preliminary estimate under the near steady-state conditions; and controlling a vehicle system based on the blended estimate of the total roll angle.

The present invention provides an improved method of estimating the absolute roll angle of a vehicle body under any operating condition, including normal driving, emergency maneuvers, driving on banked roads and near rollover situations. The roll angle estimate is based on typically sensed parameters, including roll rate, lateral acceleration, yaw rate, vehicle speed, and optionally, longitudinal acceleration. Roll rate sensor bias is identified by comparing the sensed roll rate with roll rate estimates inferred from other measured parameters for fast and accurate removal of the bias. A first preliminary estimate of roll angle, generally reliable in nearly steady-state conditions, is determined from a kinematic relationship involving lateral acceleration, yaw rate and vehicle speed. The final or blended estimate of roll angle is then determined by blending the preliminary estimate with a second preliminary estimate based on the bias-corrected measure of roll rate. In the blending process, the relative weighting between two preliminary roll angle estimates depends on their frequency and on the driving conditions so that the final estimate continuously favors the more accurate of the preliminary estimates. The blended estimate is used for several purposes, including estimating the lateral velocity and side-slip angle of the vehicle.

BRIEF DESCRIPTION OF THE DRAWINGS

FIG. 1 is a diagram of a vehicle during a cornering maneuver on a banked road;
FIG. 2 is a diagram of a system for the vehicle of FIG. 1, including a microprocessor-based controller for carrying out the method of this invention; and
FIG. 3 is a flow diagram representative of a software routine periodically executed by the microprocessor-based controller of FIG. 2 for carrying out the method of this invention.

DESCRIPTION OF THE PREFERRED EMBODIMENT

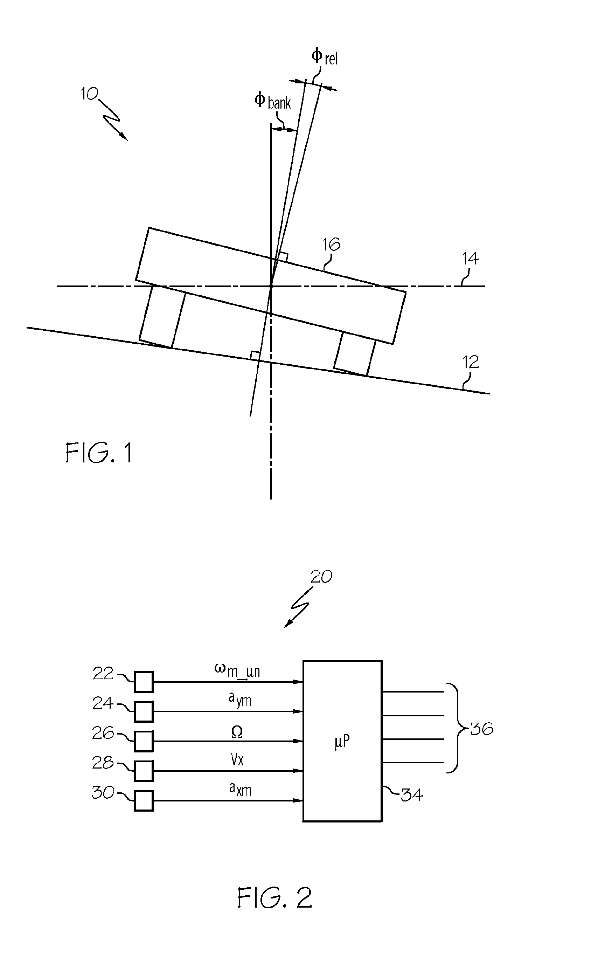

Referring to FIG. 1, the reference numeral 10 generally designates a vehicle being operated on a road surface 12. In the illustration, the road surface 12 is laterally inclined (i.e., banked) relative to the level ground plane 14 by an angle $\phi_{bank}$. Additionally, the body 16 of vehicle 10 has a roll angle $\phi_{rel}$ relative to the road surface 12 due to suspension and tire compliance. The total or absolute roll angle $\phi$ of the vehicle body 16 thus includes both the bank angle $\phi_{bank}$ and the relative roll angle $\phi_{rel}$.

If the roll rate $\omega$ of vehicle 10 about its longitudinal axis is measured, an estimate $\phi_{e\omega}$ of the total roll angle $\phi$ can be determined in principle by integrating the measured roll rate, as follows:

$$\phi_{e\omega}(t) = \int\limits_{0}^{t} \omega_m(\tau)d\tau \tag{1}$$

where $t$ denotes time and $\omega_m$ is the measured roll rate. Unfortunately, the output of a typical roll rate sensor includes some bias error that would be integrated along with the portion of the output actually due to roll rate. Thus, pure integration of the measured roll rate has infinite sensitivity to the bias error because the error is integrated over time. When dead-banding and high-pass (i.e., wash-out) filtering are used to compensate for the bias error, there is still a conflict between the immunity to bias and the ability to track slowly-varying (or constant) roll angles because the bias compensation also reduces the portion of the signal actually due to roll rate. As a result, a roll angle estimate based on roll rate integration is reasonably good during quick transient maneuvers, but less accurate during slow maneuvers or in nearly steady-state conditions when the roll angle changes slowly. As explained below, one aspect of the present invention is directed to an improved method of compensating for the bias error in a measured roll rate signal without substantially diminishing the portion of the signal actually due to roll rate.

An alternative way of determining the total roll angle $\phi$ is to consider it in the context of the kinematic relationship:

$$a_{ym} = \dot{v}_y + v_x \Omega - g \sin\phi \tag{2}$$

where $v_y$ is the lateral velocity of vehicle center-of-gravity, $v_x$ is the vehicle longitudinal velocity, $\Omega$ is vehicle yaw rate, and g is the acceleration of gravity (9.806 m/s$^2$). The sign convention used in equation (2) assumes that lateral acceleration $a_{ym}$ and yaw rate $\Omega$ are positive in a right turn, but the roll angle $\phi$ due to the turning maneuver is negative.

During nearly steady-state conditions, the derivative of lateral velocity (i.e., $\dot{v}_y$) is relatively small, and an estimate $\phi_{ek}$ of the roll angle $\phi$ can be obtained by ignoring $\dot{v}_y$ and solving equation (2) for $\phi$ as follows:

$$\phi_{ek} = \sin^{-1}\frac{v_x\Omega - a_{ym}}{g} \tag{3}$$

The longitudinal velocity $v_x$, the yaw rate $\Omega$, and the lateral acceleration $a_{ym}$ can be measured, and $g$ is simply a gravitational constant as mentioned above. Thus, a reasonably good estimate $\phi_{ek}$ of roll angle $\phi$ under nearly steady-state conditions may be easily calculated. However, the accuracy of the estimate $\phi_{ek}$ deteriorates in transient maneuvers where the derivative of lateral velocity is non-negligible.

In summary, the foregoing methods of estimating absolute roll angle each have significant limitations that limit their usefulness. As explained above, a roll angle estimate based on roll rate integration is reasonably good during quick transient maneuvers, but less accurate during slow maneuvers or in nearly steady-state conditions when roll angle changes slowly due to inability to separate the bias error from the portion of the signal actually due to roll rate. On the other hand, the roll angle estimate $\phi_{ek}$ based on the kinematic relationship of equations (2) and (3) is reasonably good during nearly steady-state (low frequency) maneuvers, but unreliable during transient (high frequency) maneuvers.

It can be seen from the above that the two roll angle estimation methods are complementary in that conditions that produce an unreliable estimate from one estimation method produce an accurate estimate from the other estimation method, and vice versa. Accordingly, the method of this invention blends both estimates in such a manner that the blended roll angle estimate is always closer to the initial estimate that is more accurate.

FIG. 2 is a diagram of an electronic control system 20 installed in vehicle 10 for enhancing vehicle stability and occupant safety. For example, the system 20 may include a vehicle stability control (VSC) system for dynamically activating the vehicle brakes to enhance stability and reduce the likelihood of rollover, and a supplemental restraint system (SRS) for deploying occupant protection devices such as seat belt pretensioners and side curtain air bags in response to detection of an impending rollover event. System sensors include a roll rate sensor 22 responsive to the time rate of angular roll about the vehicle longitudinal axis, a lateral acceleration sensor 24 responsive to the vehicle acceleration along its lateral axis, a yaw rate sensor 26 responsive to the time rate of yaw motion about the vehicle vertical axis, and at least one wheel speed sensor 28 for estimating the vehicle velocity along its longitudinal axis. Optionally, the system 20 additionally includes a longitudinal acceleration sensor 30 responsive to the vehicle acceleration along its longitudinal axis. In practice, ordinary VSC systems include most if not all of the above sensors. Output signals produced by the sensors 22-30 are supplied to a microprocessor-based controller 34 which samples and processes the measured signals, carries out various control algorithms, and produces outputs 36 for achieving condition-appropriate control responses such as brake activation and deployment of occupant restraints. Of course, the depicted arrangement is only illustrative; for example, the functionality of controller 34 may be performed by two or more individual controllers if desired.

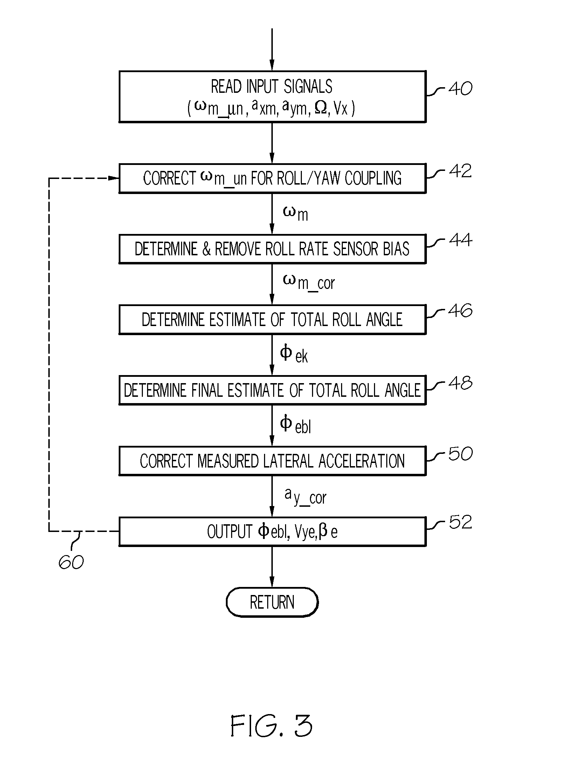

FIG. 3 depicts a flow diagram representative of a software routine periodically executed by the microprocessor-based controller 34 of FIG. 2 for carrying out the method of the present invention. The input signals read at block 40 of the flow diagram include measured uncompensated roll rate $\omega_{m\_un}$, measured lateral acceleration $a_{ym}$, yaw rate $\Omega$, vehicle speed $v_x$, and optionally, hand-wheel (steering) angle $HWA$ and measured longitudinal acceleration $a_{xm}$. It is assumed for purposes of the present disclosure that the yaw rate $\Omega$ and lateral acceleration $a_{ym}$ input signals have already been compensated for bias error, as is customarily done in VSC systems. Furthermore, it is assumed that all the input signals have been low-pass filtered to reduce the effect of measurement noise.

Block 42 pertains to systems that include a sensor 30 for measuring longitudinal acceleration $a_{xm}$, and functions to compensate the measured roll rate $\omega_{m\_un}$ for pitching of vehicle 10 about the lateral axis. Pitching motion affects the roll rate detected by sensor 22 due to cross coupling between the yaw rate and roll rate vectors when the vehicle longitudinal axis is inclined with respect to the horizontal plane 14. This occurs, for example, during driving on a spiral ramp. Under such conditions the vertical yaw rate vector has a component along the longitudinal (i.e. roll) axis, to which sensor 22 responds. This component is not due to change in roll angle and should be rejected before the roll rate signal is further processed. In general, the false component is equal to the product of the yaw rate $\Omega$ and the tangent of the pitch angle $\theta$. The absolute pitch angle $\theta$ is estimated using the following kinematic relationship:

$$a_{xm} = \dot{v}_x - v_y\Omega + g\sin\theta \qquad (4)$$

where $a_{xm}$ is the measured longitudinal acceleration, $\dot{v}_x$ is the time rate of change in longitudinal speed $v_x$, $v_y$ is the vehicle's side-slip or lateral velocity, $\Omega$ is the measured yaw rate, and g is the acceleration of gravity. Equation (4) can be rearranged to solve for pitch angle $\theta$ as follows:

$$\theta = \sin^{-1} \frac{a_{xm} - \dot{v}_x + v_y\Omega}{g} \qquad (5)$$

The term $\dot{v}_x$ is obtained by differentiating (i.e., high-pass filtering) the estimated vehicle speed $v_x$. If the lateral velocity $v_y$ is not available, the product $(v_y\Omega)$ can be ignored because it tends to be relatively small as a practical matter. However, it is also possible to use a roll angle estimate to estimate the lateral velocity $v_y$, and to feed that estimate back to the pitch angle calculation, as indicated by the dashed flow line 60. Also, the accuracy of the pitch angle calculation can be improved by magnitude limiting the numerator of the inverse-sine function to a predefined threshold such as 4 m/s$^2$. The magnitude-limited numerator is then low-pass filtered with, for example, a second-order filter of the form $b_{nf}^2 / (s^2 + 2\varsigma b_{nf} + b_{nf}^2)$, where $b_{nf}$ is the undamped natural frequency of the filter and $\zeta$ is the damping ratio (example values are $b_{nf}$ = 3 rad/sec and $\zeta$ = 0.7). Also, modifications in the pitch angle calculation may be made during special conditions such as heavy braking when the vehicle speed estimate $v_x$ may be inaccurate. In any event, the result of the calculation is an estimated pitch angle $\theta_e$, which may be subjected to a narrow dead-zone to effectively ignore small pitch angle estimates. Of course, various other pitch angle estimation enhancements may be used, and additional sensors such as a pitch rate sensor can be used to estimate $\theta$.

Once the pitch angle estimate $\theta_e$ is determined, the measured roll rate is corrected by adding the product of the yaw rate $\Omega$ and the tangent of the pitch angle $\theta_e$ to the measured roll rate $\omega_{m\_un}$ to form the pitch-compensated roll rate $\omega_m$ as follows:

$$\omega_m = \omega_{m\_un} + \Omega \tan \theta_e \qquad (6)$$

Since in nearly all cases, the pitch angle $\theta_e$ is less than 20° or so, equations (5) and (6) can be simplified by assuming that $\sin\theta \cong \tan\theta \cong \theta$. And as mentioned above, the measured roll rate $\omega_{m\_un}$ can be used as the pitch-compensated roll rate $\omega_m$ if the system 20 does not include the longitudinal acceleration sensor 30.

Block 44 is then executed to convert the measured roll rate signal $\omega_m$ into a bias-compensated roll rate signal $\omega_{m\_cor}$ suitable for integrating. In general, this is achieved by comparing $\omega_m$ with two or more roll rate estimates obtained from other sensors during nearly steady-state driving to determine the bias, and then gradually removing the determined bias from $\omega_m$.

A first roll rate estimate $\omega_{eay}$ is obtained by using the relationship:

$$\phi_{eay} = -R_{gain}a_{ym} \qquad (7)$$

to calculate a roll angle $\phi_{eay}$ corresponding to the measured lateral acceleration $a_{ym}$, and differentiating the result. The term $R_{gain}$ in equation (7) is the roll gain of vehicle 10, which can be estimated for a given vehicle as a function of the total roll stiffness of the suspension and tires, the vehicle mass, and distance from the road surface 12 to the vehicle's center-of-gravity. However, the measured lateral acceleration $a_{ym}$ is first low-pass filtered to reduce the effect of measurement noise. Preferably, the filter is a second-order filter of the form $b_{nf}^2 / (s^2 + 2\varsigma b_{nf} + b_{nf}^2)$, where $b_{nf}$ is the undamped natural frequency of the filter and $\zeta$ is the damping ratio (example values are $b_{nf}$ = 20 rad/s and $\zeta$ = 0.7). And differentiation of the calculated roll angle $\phi_{eay}$ is achieved by passing $\phi_{eay}$ through a first-order high-pass filter of the form $b_f s/(s+b_f)$, where $b_f$ is the filter cut off frequency (an example value is $b_f$ = 20 rad/sec).

A second roll rate estimate $\omega_{ek}$ is obtained by using equation (3) to calculate a roll angle $\phi_{ek}$ and differentiating the result. The derivative of lateral velocity, $\dot{v}_y$, is neglected since near steady-state driving conditions are assumed. Algebraically, $\phi_{ek}$ is given as:

$$\phi_{ek} = \sin^{-1} \frac{\left(v_x\Omega - a_{ym}\right)_{filt}}{g} \tag{8}$$

As indicated in the above equation, the numerator ($v_{x\Omega}$ - $a_{ym}$) of the inverse sine function is also low-pass filtered, preferably with the same form of filter used for the $a_{ym}$ in the preceding paragraph. As a practical matter, the inverse sine function can be omitted since the calculation is only performed for small roll angles (less than 3° or so). Differentiation of the calculated roll angle $\phi_{ek}$ to produce a corresponding roll rate $\omega_{ek}$ is achieved in the same way as described for roll angle $\phi_{eay}$ in the preceding paragraph.

Once the roll rate estimates $\omega_{eay}$ and $\omega_{ek}$ have been calculated, a number of tests are performed to determine their stability and reliability. First, the absolute value of each estimate must be below a threshold value for at least a predefined time on the order of 0.3 - 0.5 sec. Second, the absolute value of their difference (that is, $|\omega_{eay}$ - $\omega_{ek}|$) must be below another smaller threshold value for at least a predefined time such as 0.3 - 0.5 sec. And finally, the absolute value of the difference between the measured lateral acceleration and the product of yaw rate and vehicle speed (that is, $|a_{ym}$ - $v_x\Omega|$) must be below a threshold value such as 1 m/sec$^2$ for at least a predefined time such as 0.3 - 0.5 sec. Instead of requiring the conditions to be met for a predefined time period, it is sufficient to require that the rate-limited versions of these signals satisfy specified conditions.

When the above conditions are all satisfied, the roll rate estimates $\omega_{eay}$ and $\omega_{ek}$ are deemed to be sufficiently stable and reliable, and sufficiently close to each other, to be used for isolating the roll rate sensor bias error. In such a case, inconsistencies between the estimated roll rates and the measured roll rate are considered to be attributable to roll rate sensor bias error. First, the difference $\Delta\omega_{m\_ay}$ between the measured roll rate $\omega_m$ and the estimated roll rate $\omega_{eay}$ is computed and limited in magnitude to a predefined value such as 0.14 rad/sec to form a limited difference $\Delta\omega_{m\_ay\_lim}$. Then the roll rate sensor bias error $\omega_{bias}$ is calculated (and subsequently updated) using the following low-pass filter function:

$$\omega_{bias}(t_{i+1}) = (1 - b\Delta t)\omega_{bias}(t_i) + b\Delta t\Delta\omega_{m\_ay\_lim}(t_i) \tag{9}$$

where $t_{i+1}$ denotes the current value, $t_i$ denotes a previous value, $b$ is the filter cut off frequency (0.3 rad/sec, for example), and $\Delta t$ is the sampling period. The initial value of $\omega_{bias}$ (that is, $\omega_{bias}$ ($t_0$)) is either zero or the value of $\omega_{bias}$ from a previous driving cycle. The roll rate bias error $\omega_{bias}$ is periodically updated so long as the stability and reliability conditions are met, but updating is suspended when one or more of the specified conditions is not satisfied. As a practical matter, updating can be suspended by setting $b = 0$ in equation (9) so that $\omega_{bias}(t_{i+1}) = \omega_{bias}(t_i)$. Finally, the calculated bias error $\omega_{bias}$ is subtracted from the measured roll rate $\omega_m$, yielding the corrected roll rate $\omega_{m\_cor}$. And if desired, a narrow dead-band may be applied to $\omega_{m\_cor}$ to minimize any remaining uncompensated bias. Alternately, the kinematic-based roll rate estimate $\omega_{ek}$ can be used instead of the acceleration-based estimate $\omega_{eay}$ to calculate bias error $\omega_{bias}$.

The block 46 is then executed to determine the roll angle estimate from a kinematic relationship using measured lateral acceleration, yaw rate and estimated vehicle speed. Fundamentally, the estimate of roll angle is obtained from equation (3), but with additional processing of the numerator term ($v_x\Omega$ - $a_{ym}$) of the inverse sine function. The value of the numerator term is determined and then limited in magnitude to a threshold value $a_{thresh}$ such as 5 m/sec$^2$; the limiting serves to reduce error due to the neglected derivative of lateral velocity when it is large, as may occur during very quick transient maneuvers. The limited difference ($v_x\Omega$ - $a_{ym}$)$_{lim}$ is then passed through a low pass filter to attenuate the effect of noise; for example, the filter may be a second order filter of the form $b_{nf}^2 /(s^2 + 2\varsigma b_{nf} + b_{nf}^2)$ where $b_{nf}$ is the undamped natural frequency of the filter and $\zeta$ is the damping ratio (example values are $b_{nf}$ = 3 rad/sed and $\zeta$ = 0.7). The filter output ($v_x\Omega$ - $a_{ym}$)$_{lim\_filt}$ is then used as the numerator of equation (3) to calculate the roll angle estimate $\phi_{ek}$ as follows:

$$\phi_{ek} = \sin^{-1} \frac{(v_x\Omega - a_{ym})_{lim\_filt}}{g} \tag{10}$$

Block 48 is then executed to determine a blended estimate $\phi_{ebl}$ of the total roll angle $\phi$ by blending $\phi_{ek}$ with a roll angle determined by integrating the bias-compensated roll rate measurement $\omega_{m\_cor}$. To avoid explicitly integrating $\omega_{m\_cor}$, the terms $\omega_{m\_cor}$, $\phi_{ek}$ and $\dot{\phi}_{ebl}$ can be combined with a blending factor $b_{bl\_f}$ in a differential equation as follows:

$$\dot{\phi}_{ebl} + b_{bl\_f}\phi_{ebl} = b_{bl\_f}\phi_{etot} + \omega_{m\_cor} \qquad (11)$$

Representing equation (11) in the Laplace domain, and solving for the blended roll angle estimate $\phi_{ebl}$ yields:

$$\phi_{ebl} = \frac{b_{bl\_f}}{s + b_{bl\_f}}\phi_{ek} + \frac{1}{s + b_{bl\_f}}\omega_{m\_cor} \qquad (12)$$

which in practice is calculated on a discrete-time domain basis as follows:

$$\phi_{ebl}(t_{i+1}) = (1 - b_{bl\_f}\Delta t)[\phi_{ebl}(t_i) + \Delta t\omega_{m\_cor}(t_{i+1})] + b_{bl\_f}\Delta t\phi_{ek}(t_{i+1}) \qquad (13)$$

where $t_{i+1}$ denotes the current value, $t_i$ denotes a previous value, and $\Delta t$ is the sampling period. If the roll angle obtained by integrating $\omega_{m\_cor}$ is denoted by $\phi_\omega$, the blended roll angle estimate $\phi_{ebl}$ may be equivalently expressed as:

$$\phi_{ebl} = \frac{b_{bl\_f}}{s + b_{bl\_f}}\phi_{ek} + \frac{s}{s + b_{bl\_f}}\phi_\omega \qquad (14)$$

In this form, it is evident that the blended roll angle estimate $\phi_{ebl}$ is a weighted sum of $\phi_{ek}$ and $\phi_\omega$, with the weight dependent on the frequency of the signals (designated by the Laplace operand "$s$") so that the blended estimate $\phi_{ebl}$ is always closer to the preliminary estimate that is most reliable at the moment. During steady-state conditions, the body roll rate is near-zero and the signal frequencies are also near-zero. Under such steady-state conditions, the coefficient of $\phi_{ek}$ approaches one and the coefficient of $\phi_\omega$ approaches zero, with the result that $\phi_{ek}$ principally contributes to $\phi_{ebl}$. During transient conditions, on the other hand, the body roll rate is significant, and the signal frequencies are high. Under such transient conditions, the coefficient of $\phi_{ek}$ approaches zero and the coefficient of $\phi_\omega$ approaches one, with the result that $\phi_\omega$ principally contributes to $\phi_{ebl}$. The change between these two extreme situations is gradual and the transition depends on the value of blending factor $b_{bl\_f}$ (i.e., the filter cut off frequency).

The blending factor $b_{bl\_f}$ may be a fixed value, but is preferably adjusted in value depending on whether the vehicle 10 is in a nearly steady-state condition or a transient condition in terms of either the roll motion or the yaw motion of the vehicle. If vehicle 10 is in a nearly steady-state condition, the blending factor $b_{bl\_f}$ is set to a relatively high value such as 0.488 rad/sec. to emphasize the contribution of the roll angle estimate $\phi_{ek}$ to $\phi_{ebl}$ while de-emphasizing the estimate $\phi_\omega$ based on measured roll rate. If vehicle 10 is in a transient condition, the blending factor $b_{bl\_f}$ is set to a relatively low value such as 0.048 rad/sec. to emphasize the contribution of the roll angle estimate $\phi_\omega$ to $\phi_{ebl}$, while de-emphasizing the contribution of the kinematic-based roll angle estimate $\phi_{ek}$.

According to a preferred embodiment, the presence of a nearly steady-state condition is detected when a set of three predefined conditions have been met for a specified period of time such as 0.5 seconds. First, the magnitude of the bias-compensated roll rate (i.e., $|\omega_{m\_cor}|$) must be below a first threshold such as 0.25 rad/sec. The second and third conditions pertain to the numerator ($v_x\Omega - a_{ym}$) of equation (3), which is generally proportional to the relative roll angle $\phi_{rel}$. The difference ($v_x\Omega - a_{ym}$) is passed through a first-order low pass filter to form ($v_x\Omega - a_{ym}$)$_{fil}$, and then differentiated to form ($v_x\Omega - a_{ym}$)$_{fil\_der}$, an indicator of roll rate. The second condition for detecting a nearly steady-state condition is that $|(v_x\Omega - a_{ym})_{fil}|$ must be below a threshold such as 4.0 m/sec$^2$, and the third condition is that $|(v_x\Omega -$

$a_{ym})_{fil\_der}$| must be below a threshold such as 2.0 m/sec$^3$. If all three conditions are satisfied for the specified time period, a nearly steady-state condition is detected and $b_{bl\_f}$ is set to the relatively high value of 0.488 rad/sec. Otherwise, a nearly steady-state condition is not detected and $b_{bl\_f}$ is set to the relatively low value of 0.048 rad/sec. Of course, those skilled in art will recognize that various other conditions can be established to determine whether the vehicle 10 is in a nearly steady-state condition or a transient condition, using measured or calculated parameters such as change of yaw rate, handwheel (steering) angle $HWA$, and so on.

Block 50 is then executed to compensate the measured lateral acceleration $a_{ym}$ for the gravity component due to roll angle. The corrected lateral acceleration $a_{ycor}$ is given by the sum $(a_{ym} + g\sin\phi_{ebl})$, where $\phi_{ebl}$ is the blended roll angle estimate determined at block 48. The corrected lateral acceleration $a_{ycor}$ can be used in conjunction with other parameters such as roll rate and vehicle speed for detecting the onset of a rollover event.

Finally, block 52 is executed to use the blended roll angle estimate $\phi_{ebl}$ to estimate other useful parameters including the vehicle side slip (i.e., lateral) velocity $v_y$ and side-slip angle $\beta$. The derivative of lateral velocity can alternately be expressed as $(a_y - v_x\Omega)$ or $(a_{ym} + g\sin\phi - v_x\Omega)$, where $a_y$ in the expression $(a_y - v_x\Omega)$ is the actual lateral acceleration, estimated in block 50 as corrected lateral acceleration $a_{ycor}$. Thus, derivative of lateral velocity may be calculated using $a_{ycor}$ for $a_y$ in the expression $(a_y - v_x\Omega)$, or using the blended roll angle estimate $\phi_{ebl}$ for $\phi$ in the expression $(a_{ym} + g\sin\phi - v_x\Omega)$. Integrating either expression then yields a reasonably accurate estimate $v_{ye}$ of side slip velocity $v_y$, which can be supplied to block 42 for use in the pitch angle calculation, as indicated by the broken flow line 60. And once the side-slip velocity estimate $v_{ye}$ has been determined, the side-slip angle $\beta$ at the vehicle's center of gravity is calculated as:

$$\beta = \tan^{-1}\frac{v_{ye}}{v_x} \qquad\qquad (15)$$

In summary, the present invention provides a novel and useful way of accurately estimating the absolute roll angle of a vehicle body under any vehicle operating condition by blending two preliminary estimates of roll angle according to their frequency. A first preliminary roll angle estimate based on the measured roll rate is improved by initially compensating the roll rate signal for bias error using roll rate estimates inferred from other measured parameters. And a second preliminary roll angle estimate is determined based on the kinematic relationship among roll angle, lateral acceleration, yaw rate and vehicle speed. The blended estimate of roll angle utilizes a blending coefficient that varies with the frequency of the preliminary roll angle signals so that the blended estimate continuously favors the more accurate of the preliminary roll angle estimates, and a blending factor used in the blending coefficient is set to different values depending whether the vehicle is in a steady-state or transient condition. The blended estimate is used to estimate the actual lateral acceleration, the lateral velocity and side-slip angle of the vehicle, all of which are useful in applications such as rollover detection and vehicle stability control.

While the present invention has been described with respect to the illustrated embodiment, it is recognized that numerous modifications and variations in addition to those mentioned herein will occur to those skilled in the art. For example, the some or all of equations be characterized as look-up tables to minimize computation requirements, and trigonometric functions may be approximated by their Fourier expansion series. Also, the lateral velocity may be determined using a model-based (i.e., observer) technique with the corrected lateral acceleration $a_{ycor}$ as an input, instead of integrating the estimated derivative of lateral velocity. Finally, it is also possible to apply the blending method of this invention to estimation of absolute pitch angle $\theta$ in systems including a pitch rate sensor; in that case, a first preliminary pitch angle estimate would be obtained by integrating a bias-compensated measure of the pitch rate, and a second preliminary pitch angle estimate would be obtained from equation (5). Of course, other modifications and variations are also possible. Accordingly, it is intended that the invention not be limited to the disclosed embodiment, but that it have the full scope permitted by the language of the following claims.

**Claims**

1.   A method of operation for a vehicle (10) having a body (16) that rolls about a longitudinal axis relative to a level ground plane (14), comprising the steps of:

determining (42, 44, 48) a first preliminary estimate of a total roll angle of the vehicle body (16) based on a signal produced by a roll rate sensor (22), said first preliminary estimate having a high accuracy under transient conditions;
determining (46) a second preliminary estimate of the total roll angle based on a measured yaw rate (26) of the vehicle body (16), an estimated longitudinal velocity (28) of the vehicle body (16) and a measured lateral acceleration (24) of the vehicle body (16), said second preliminary estimate having a high accuracy under near steady-state conditions;

blending the first and second preliminary estimates of the total roll angle with blending coefficients to form a blended estimate of the total roll angle (48), where the blending coefficients are continuously variable according to a frequency of said first and second preliminary estimates so that the blended estimate favors the first preliminary estimate under the transient conditions and the second preliminary estimate under the near steady-state conditions; and

controlling (52) a vehicle system (34) based on the blended estimate of the total roll angle.

2. The method of claim 1, including the steps of:

   determining (44) a bias error in the signal produced by the roll rate sensor (22); and
   removing (44) the determined bias error from the signal produced by the roll rate sensor (22) before determining said first preliminary estimate of the total roll angle.

3. The method of claim 2, where the step of determining the bias error in the signal produced by the roll rate sensor includes the steps of:

   determining (44) at least one auxiliary roll rate estimate based on sensed parameters other than the roll rate during the steady-state conditions;
   determining (44) a difference between the auxiliary roll rate estimate and the signal produced by the roll rate sensor (22);
   limiting (44) a magnitude of said difference to form a limited difference; and

   determining (44) said bias error by low-pass filtering said limited difference.

4. The method of claim 3, where the step of determining at least one auxiliary roll rate estimate includes the steps of:

   determining (44) a roll angle estimate based on sensed parameters other than the roll rate during the steady-state conditions; and
   differentiating (44) the determined roll angle estimate to form the auxiliary roll rate estimate.

5. The method of claim 1, including the step of:

   determining (46) the second preliminary estimate $\phi_{ek}$ of the total roll angle according to:

$$\phi_{ek} = \sin^{-1}\frac{(v_x\Omega - a_{ym})}{g}$$

   where $\Omega$ is the measured yaw rate of the vehicle body (16), $v_x$ is the estimated longitudinal velocity of the vehicle body (16), $a_{ym}$ is the measured lateral acceleration of the vehicle body (16), and g is a gravitational constant.

6. The method of claim 5, including the step of:

   magnitude (46) limiting and low-pass filtering the difference $(v_x\Omega - a_{ym})$ before determining the second preliminary estimate $\phi_{ek}$ of the total roll angle.

7. The method of claim 1, including the steps of:

   measuring a lateral acceleration (24) of the vehicle body (16); and
   compensating the measured lateral acceleration for a gravity component due to the blended estimate of the total roll angle (50); and
   controlling (52) the vehicle system (34) based on compensated lateral acceleration.

8. The method of claim 1, including the steps of:

determining a lateral velocity of the vehicle body based on the blended estimate of the total roll angle (52); and controlling (52) the vehicle system (34) based on determined lateral velocity.

9. The method of claim 8, including the steps of:

determining (42) a pitch angle of the vehicle body (16) based on the determined lateral velocity, measures of longitudinal acceleration and yaw rate (30, 26) of the vehicle body (16), and an estimated longitudinal velocity (28) of the vehicle (10);
compensating (42) the signal produced by the roll rate sensor (22) due to the determined pitch angle; and determining (44, 48) said first preliminary estimate of the total roll angle based on the compensated roll rate sensor signal.

10. The method of claim 8, including the step of:

determining (52) a side-slip angle of the vehicle (10) based on the determined lateral velocity and an estimate of a longitudinal velocity (28) of the vehicle (10); and controlling (52) the vehicle system (34) based on determined side-slip angle.

$\phi_{rel}$

$\phi_{bank}$

10

16

14

12

FIG. 1

20

22    $\omega_{m\_un}$

24    $a_{ym}$

26    $\underline{\Omega}$

28    Vx

30    $a_{xm}$

μP

34

36

FIG. 2

READ INPUT SIGNALS
$( \omega_{m\_\mu n}, a_{xm}, a_{ym}, \Omega, V_x )$ — 40

CORRECT $\omega_{m\_un}$ FOR ROLL/YAW COUPLING — 42

$\omega_m$

DETERMINE & REMOVE ROLL RATE SENSOR BIAS — 44

$\omega_{m\_cor}$

DETERMINE ESTIMATE OF TOTAL ROLL ANGLE — 46

$\phi_{ek}$

DETERMINE FINAL ESTIMATE OF TOTAL ROLL ANGLE — 48

$\phi_{ebl}$

CORRECT MEASURED LATERAL ACCELERATION — 50

$a_{y\_cor}$

OUTPUT $\phi_{ebl}, V_{ye}, \beta_e$ — 52

60

RETURN

FIG. 3

Europäisches
Patentamt

European
Patent Office

Office européen
des brevets

**EUROPEAN SEARCH REPORT**

Application Number

EP 09 16 0540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 346 856 A (FORD GLOBAL TECH INC [US]) 24 September 2003 (2003-09-24) * page 5, paragraph 40 - page 6, paragraph 48 * | 1,5,6 | INV. B60W40/10 B60T8/172 B60R21/013 |
| Y | | 2-4,7-10 | |
| Y | DE 10 2006 061483 A1 (CONTINENTAL TEVES AG & CO OHG [DE]) 23 August 2007 (2007-08-23) * page 6, paragraph 55 - page 7, paragraph 65 * | 1,5,6 | |
| Y | EP 1 386 802 A (FORD GLOBAL TECH LLC [US]) 4 February 2004 (2004-02-04) * page 3, paragraph 24 - page 3, paragraph 25 * | 1,5,6 | |
| Y | US 2003/055549 A1 (BARTA DAVID JOHN [US] ET AL) 20 March 2003 (2003-03-20) * page 6, paragraph 92 - page 7, paragraph 98; figure 7 * | 2-4 | |
| Y | EP 1 219 500 A (TOYOTA MOTOR CO LTD [JP]) 3 July 2002 (2002-07-03) * page 5, paragraph 32 - page 6, paragraph 37 * * page 13, paragraph 105 * | 7,8 | TECHNICAL FIELDS SEARCHED (IPC) B60W B60T B60R |
| Y | US 2006/235575 A1 (BROWN TODD [US] ET AL) 19 October 2006 (2006-10-19) * page 3, paragraph 41 - page 4, paragraph 49 * | 9,10 | |
| A | US 2002/173882 A1 (TOBARU SHIGEO [JP] ET AL) 21 November 2002 (2002-11-21) * page 9, paragraph 115 - page 10, paragraph 117; figure 17 * | 1-10 | |

-/--

The present search report has been drawn up for all claims

| Place of search | Date of completion of the search | Examiner |
|---|---|---|
| Munich | 11 September 2009 | Marx, Winfried |

EPO FORM 1503 03.82 (P04C01)

EP 2 127 988 A1

**EUROPEAN SEARCH REPORT**

Application Number

EP 09 16 0540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/107935 A (KONINKL PHILIPS ELECTRONICS NV [NL]; PEETERS FELIX G P [NL]; GOOSSENS) 27 September 2007 (2007-09-27) * page 5, line 16 - page 6, line 25 * ----- | 1-10 | |

TECHNICAL FIELDS
SEARCHED      (IPC)

The present search report has been drawn up for all claims

| Place of search | Date of completion of the search | Examiner |
|---|---|---|
| Munich | 11 September 2009 | Marx, Winfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 09 16 0540

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2009

| Patent document cited in search report | | Publication date | Patent family member(s) | | Publication date |
|---|---|---|---|---|---|
| EP 1346856 | A | 24-09-2003 | US 2003182025 A1 | | 25-09-2003 |
| DE 102006061483 | A1 | 23-08-2007 | EP 1989086 A1 | | 12-11-2008 |
| | | | WO 2007096319 A1 | | 30-08-2007 |
| | | | US 2009222164 A1 | | 03-09-2009 |
| EP 1386802 | A | 04-02-2004 | US 2004059480 A1 | | 25-03-2004 |
| | | | US 2004181329 A1 | | 16-09-2004 |
| US 2003055549 | A1 | 20-03-2003 | US 2006030991 A1 | | 09-02-2006 |
| EP 1219500 | A | 03-07-2002 | DE 60104638 D1 | | 09-09-2004 |
| | | | DE 60104638 T2 | | 11-08-2005 |
| | | | JP 3518509 B2 | | 12-04-2004 |
| | | | JP 2002200951 A | | 16-07-2002 |
| | | | US 2002087235 A1 | | 04-07-2002 |
| US 2006235575 | A1 | 19-10-2006 | DE 102006016746 A1 | | 19-10-2006 |
| | | | GB 2425189 A | | 18-10-2006 |
| US 2002173882 | A1 | 21-11-2002 | NONE | | |
| WO 2007107935 | A | 27-09-2007 | CN 101405171 A | | 08-04-2009 |
| | | | EP 1998989 A1 | | 10-12-2008 |
| | | | US 2009103319 A1 | | 23-04-2009 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6542792 B, Schubert
- US 6292759 B
- US 6678631 B, Schiffmann